# NEW EUROPEAN PATENT SPECIFICATION

(11) **EP 1 246 745 B2**
(45) Date of publication and mention of the opposition decision: **22.01.2014**
(45) Mention of the grant of the patent: 05.09.2007
(21) Application number: 00983656.0
(22) Date of filing: 13.12.2000
(51) Int. Cl.: B60T 13/58, B60T 11/24

(54) **DEVICE TO CONTROL A BRAKE ARRANGEMENT AND A BRAKE SYSTEM FOR A HEAVY VEHICLE WITH SUCH A BRAKE ARRANGEMENT**
VORRICHTUNG ZUR STEUERUNG EINER BREMSANORDNUNG UND EINER BREMSANLAGE FÜR EINEN LASTKRAFTWAGEN MIT EINER SOLCHEN BREMAANORDNUNG
DISPOSITIF SERVANT A COMMANDER UN EQUIPEMENT DE FREINAGE ET UN SYSTEME DE FREINAGE DESTINE A UN VEHICULE LOURD DOTE D'UN EQUIPEMENT DE FREINAGE DE CE TYPE

(30) Priority: 13.12.1999 SE 9904556
(43) Date of publication of application: 09.10.2002
(73) Proprietor: Scania CV AB (publ), 151 87 Södertälje (SE)
(72) Inventor: ANDERSSON, Håkan, S-151 46 Södertälje (SE); ENGELKE, Peter, S-151 48 Södertälje (SE); VÅGSTEDT, Nils-Gunnar, S-187 74 Täby (SE); HEDSTRÖM, Lars-Gunnar, S-610 71 Vagnhärad (SE); BORTOLIN, Gianantonio, I-33070 Brugnera (IT); GUTMAN, Per-Olof, 34861 Haifa (IL)
(74) Representative: Thum, Bernhard
(86) International application number: PCT/SE2000/002508
(87) International publication number: WO 2001/045992

(56) References cited:
- DE-A- 4 313 685
- DE-A- 19 642 344
- DE-A1- 3 434 512
- DE-A1- 19 604 391
- DE-B- 1 214 102
- JP-A- 09 084 207
- JP-A- 10 119 741
- US-A- 5 169 214
- US-A- 5 303 986
- US-A- 5 731 977

## Description

### BACKGROUND OF THE INVENTION AND STATE OF THE ART

This invention relates to a device for controlling a brake arrangement on a heavy vehicle according to the preamble of patent claim 1.

The brakes on heavy vehicles, for example trucks, function using wheel brakes, which can for example be drum brakes or disc brakes.

When the brakes are applied for a long period, such as when descending a long hill, there is a risk of so-called heat fading, i.e. a reduction in the braking effect because the brake linings become very heated. The wheel brakes on heavy vehicles are usually applied using compressed air and if the wheel brakes are often released and applied during a long period of braking, the requirements on the air system are stringent. There is a risk that the air control pressure can drop, which results in a reduction in the braking effect. On traditional trucks the air passes from a reservoir to the brake chambers at a pressure that is decided by the force exerted on the brake pedal by the driver. On newer truck models the main brakes are controlled by EBS, Electronic Braking System, where the pressure on the brake pedal is sensed electrically.

With the object of diminishing the above mentioned risks, extra auxiliary brakes have been developed which are applied independently of the wheel brakes. The auxiliary brakes can be applied for long periods thus allowing the brake linings of the wheel brakes to be kept cold for emergency situations or heavy braking. Furthermore, the auxiliary brakes can be applied for long periods without any overheating.

The retarder is an auxiliary brake of this type, in particular the type of retarder that generates a braking torque using viscous friction, for example, using oil between a stator and a rotor. The retarder can be connected to the propeller shaft of the heavy vehicle and thus apply a braking torque to the shaft which is transferred to the driven wheels of the heavy vehicle. The braking power of the retarder increases as the speed of the propeller shaft increases and the time before the retarder starts to apply the braking torque depends on previous applications of the retarder. Before the retarder starts to produce an outgoing braking torque, the space between the stator and the rotor must be filled with oil. The retarder can contain a pump and an oil reservoir. The lower the speed of the propeller shaft of the heavy vehicle, the longer time it takes to fill the space between the stator and rotor. An oil accumulator connected to the oil reservoir is often used to quicken this operation. One problem with the retarder is that the driver experiences the long and varied time before application of the retarder as inconvenient.

Another example of an auxiliary brake is the exhaust brake, which is mounted in the exhaust pipe and is thus connected to the engine of the heavy vehicle. The exhaust brake contains some type of valve device than can be arranged to be operated by a pneumatic cylinder. The function of the exhaust brake is to increase the natural braking effect of the engine. The braking torque produced by the exhaust brake depends on the type of engine and the current gear on the vehicle. The exhaust brake is effective in the lower gears.
Another auxiliary brake that increases the natural braking effect of the engine is the compression brake, often called the "jake brake".

As mentioned earlier, the brakes above, i.e. the wheel brakes and the auxiliary brakes, function independently of each other. These brakes can have separate controls. However, on some trucks the wheel brakes and the retarder are activated using the same pedal. When the driver depresses the brake pedal, the retarder is activated first, which corresponds to a little slack in the pedal movement. After this the wheel brakes are activated. However, this solution is unsatisfactory because a long time is needed to activate the retarder and the time can vary. There can be a time delay of several seconds before the retarder generates an outgoing braking torque. The driver can experience this delay in response as unsatisfactory and as a result the driver may press the brake pedal even harder, which can lead to an unnecessarily large braking effect, so-called over-braking.

DE 196 42 344 A1 describes a method and system for adjustment of operating conditions of retarder braking stages involving setting of predetermined conditions in accordance with signals denoting operations of accelerator and brake pedals. Here analogue signals from a speedometer shaft are digitised for a control unit, responsive to sensors of accelerator pedal position and brake pedal depression, and for a regulator of the output to a proportional valve which adjusts the braking torque at the retarder braking unit to maintain constant speed. The set-point derived from the measured speed is reset whenever pressure is removed from either the accelerator pedal or the brake pedal.
The main object of DE 196 42 344 A1 is to provide a retarder control for a redarder braking which is optimized for predefined operating conditions dependent on state/degree of accelerator and/or brake pedal activation
According to one specific embodiment, D1 however describes that retarder activation shall be delayed upon brake demand until a certain brake torque is attained on all axles of the tractor and trailer combination with the help of friction brakes, for example as activated up to 2-10% of their maximum braking torque capacity. The purpose of this procedure is to avoid jack-knifing of the trailer due to "over-braking" by the retarder acting only on the tractor rear axle.
Here the time before full retarder braking torque is available is further delayed in time when retarder activation is initiated subsequent a prior braking with main brakes.
The closed prior art disclosing the features of the preamble of claim 1 is DE 196 04 391 A1.

### SUMMARY OF INVENTION

The object of the invention is to eliminate the above mentioned problem. In particular the invention is aiming at a device and a braking system which contribute towards a fast braking response when the driver requests a braking effect. Furthermore, the invention is aiming at a device and a braking effect which contribute towards a reduction in brake lining wear on the wheel brakes.

This object is achieved with the device described in the introduction, which is characterised by the features specified in patent claim 1. The device is thus arranged to communicate with the brake control mentioned. When a driver activates a brake control, for example by depressing a brake pedal, a signal is transmitted to the mentioned control unit on the device, which can include a computer, and the control unit initiates activation of the main brake, i.e. the wheel brakes, and the auxiliary brake, which is preferably the retarder, and thus the braking effect is distributed between the main brake and the auxiliary brake. The distribution mentioned provides a fast outgoing braking torque that retards the vehicle, which the driver experiences as satisfactory.

According to the invention, the control unit is arranged to distribute essentially the whole of the braking effect to the above mentioned braking devices on the main brake during an initial period of the activation mentioned. The above mentioned braking devices, which are each arranged to operate on one wheel of the vehicle, can comprise disc brakes or drum brakes. As the braking devices quickly generate an outgoing braking torque, the largest braking effect is thus distributed to these at the beginning of the vehicle's braking.

According to the invention, the control device is arranged in such a way that the utilisation of the braking device on the mentioned main brake is minimal after the initial period. The control unit is thus arranged to distribute the largest braking effect to the named main brakes while the auxiliary brake mentioned is being applied, and after this the distribution of the braking effect to the main brakes is reduced. After the mentioned initial period, the control unit has the possibility of distributing the whole of the braking effect to the mentioned auxiliary brake and the main brakes are thus inactive. In this way the temperature of the wheel brake linings can be kept down and the wheel brakes are thus prepared for emergency situations or heavy braking requirements.

According to the invention, the control device is arranged in such a way that the sum of the braking effect from the mentioned main brake and the braking effect from the mentioned auxiliary brake essentially corresponds to a reference value. In this way a device is obtained, that makes the braking effect from the mentioned main brake and at least the mentioned auxiliary brake follow a reference value, i.e. follow a desired braking effect signal. The control unit thus contains the equipment and the algorithms needed so that the braking effect follows a desired braking effect signal. With the object of obtaining the desired braking effect quickly, the control unit is arranged, as described above, to distribute the largest braking effect to the main brake during the initial period of the activation mentioned. As the outgoing braking effect of the auxiliary brake increases, the braking effect of the main brake decreases. After a certain time and depending on the reference value, the auxiliary brake can take on the total braking effect by itself. In this way the brake linings of the main brake can be kept cold for emergency situations or when heavy braking is required.

According to a preferred embodiment of the invention, the brake control is arranged in such a way to define the reference value mentioned. The control unit of the device is thus arranged to communicate with the mentioned brake control to obtain the reference value mentioned, i.e. the desired braking effect signal. According to a preferred embodiment, when applied the brake control mentioned above is movable against the effect of a flexible force that is essentially proportional to the named reference value. The device can thus include means of sensing the force mentioned. This sensing can be implemented continuously.

According to the invention, the device includes means of sensing the vehicle's retardation and the retardation is arranged to provide feedback to the named control unit, and the control unit is arranged to compare the retardation of the vehicle to the named reference value. The braking process is thus controlled in a closed loop, i.e. the distribution of the braking effect, where the reference value is the control signal and the feedback signal is the measured value. According to the invention, the means of sensing is arranged to measure changes in vehicle speed and the reference value is equivalent to the desired retardation of the vehicle. It should be noted that the vehicle's retardation can be sensed via the vehicle's ABS sensors. It should also be noted that the means of sensing can be arranged to sense the total outgoing braking torque, i.e. the braking torque from the named main brake and the braking torque from at least the named auxiliary brake, in doing which the control unit is arranged to compare the fed back braking torque with the desired outgoing braking torque. It is also possible to arrange the means of sensing so that it senses the vehicle speed, in doing which the total braking torque can be calculated using the control unit, assuming the mass of the vehicle is known, and after which the control unit is arranged to compare the calculated braking torque to the desired outgoing braking torque.

According to another preferred embodiment of the invention, the vehicle contains a further auxiliary brake, and the control unit is arranged to distribute the braking effect between the named main brake, named auxiliary brake, and named further auxiliary brake. The named further auxiliary brake can be in the form of an exhaust brake and a compression brake, for example. After a certain time and depending on the desired braking effect, the control unit can be arranged to distribute the braking effect only to the named auxiliary brake that comprises a retarder and the named further auxiliary brake, for example, either an exhaust brake or a compression brake, and the brake linings of the wheel brakes can thus be kept cold for emergency situations or when heavy braking is required. If the desired braking effect drops, the control unit can be arranged to distribute the largest braking effect to the exhaust brake.

There are further properties and characteristics of the invention in the following description, the enclosed drawings, and other dependent patent claims.

### BRIEF DESCRIPTION OF THE DRAWINGS

Preferred embodiments of the invention are described below by way of examples with reference to the attached drawings, in which:
- Fig 1: shows schematically how the main brake and auxiliary brakes are arranged in a heavy vehicle, such as a truck,
- Fig 2: shows schematically a braking system according to the invention,
- Fig 3: illustrates schematically the braking process in Fig 2 in the form of a graph diagram.

### DETAILED DESCRIPTION OF A PREFERRED EMBODIMENT OF THE INVENTION

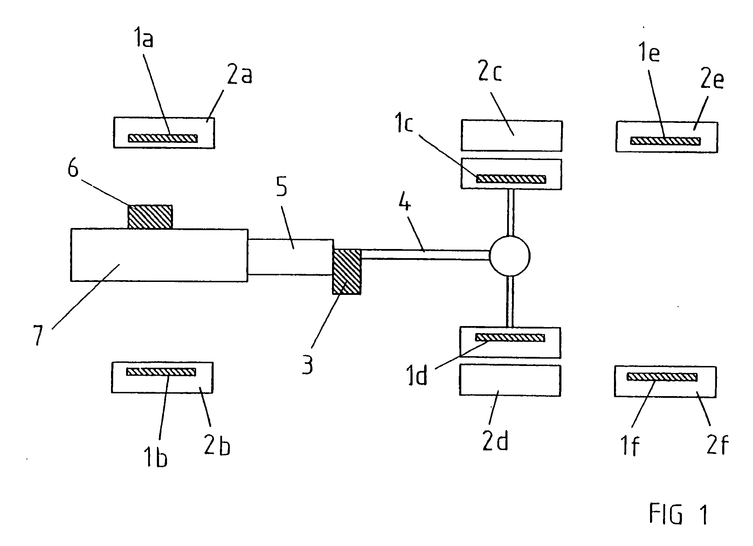

Fig 1 depicts schematically the location of the available brakes on a heavy vehicle such as a truck. The vehicle contains a main brake, which includes braking devices 1a-f arranged to act on the vehicle wheels 2a-f. The braking devices 1a-f can consist of pneumatic disc brakes, and in this case the main brake comprises the equipment needed to press the brake pads of the respective disc brakes against the discs that rotate with the wheels 2a-f in question. The vehicle contains an auxiliary brake in the form of a retarder 3 that generates outgoing braking torque using viscous friction. The retarder 3 can be of the type described in the introductory description. The retarder 3 is thus connected to the propeller shaft 4 and to the vehicle gearbox 5 and brakes only the driven wheels 2c-d. The vehicle also contains a further auxiliary brake in the form of an exhaust brake 6. The exhaust brake 6 can be of the type described in the introductory description. The exhaust brake 6 is connected to the vehicle engine 7.

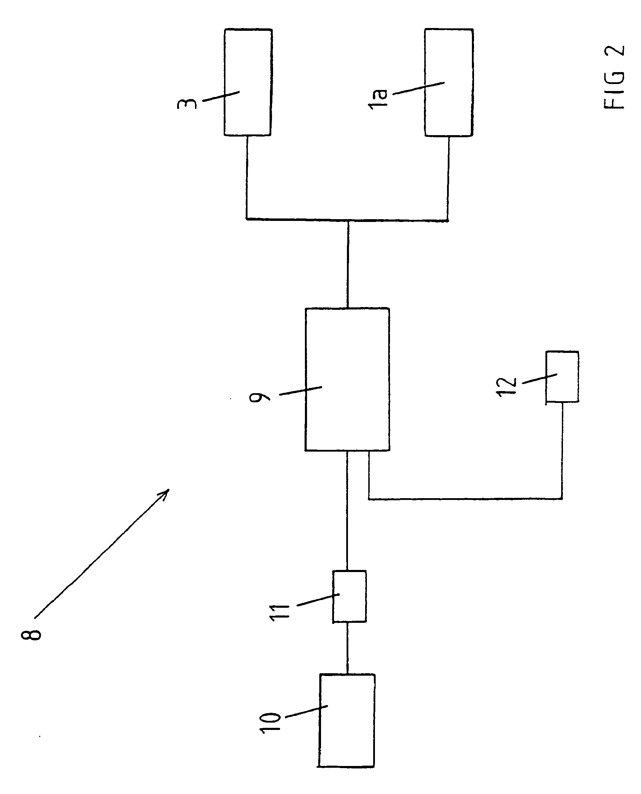

Fig 2 depicts a braking system 8, according to a preferred embodiment of the invention, on a heavy vehicle such as a truck. The braking system comprises a control unit 9, the main brake and its braking devices 1 a-f (only one braking device 1 a is shown in Fig 2), the retarder 3, and a brake control 10, with which both the brakes are activated. It should be noted that the braking system 8 could also include the exhaust brake 6. The braking system 8 comprises furthermore the first means of sensing 11 and the second means of sensing 12. The way the various parts of the braking system 8 in Fig 2 work together is described in more detail below. It should be noted that the braking system 8 according to the invention is also applicable to other types of heavy vehicle such as, for example, other types of load-carrying vehicles, buses, and similar commercial vehicles.

The brake control 10 can include a brake pedal (not shown) that can be moved by the driver's foot against the effect of a flexible force. The flexible force is proportional to the braking effect that the driver wishes to achieve. Thus the brake control 10 defines the desired braking effect, a so-called reference value. The sensor 11 is arranged to sense the named flexible force and to transmit a signal corresponding to the desired braking effect to the control unit 9, where the reference value is calculated. The control unit 9 includes a computer and when it receives a signal the control unit 9 is arranged to initiate activation of the main brakes 1a-f and the retarder 3 and distribute the braking effect between the main brakes with their braking devices 1 a-f and the retarder 3. As it takes a certain time before the retarder 3 generates an outgoing braking torque, i.e. a braking effect, the control unit 9 is arranged to distribute essentially the whole of the braking effect to the main brake and its braking devices 1a-f during an initial period of activation. Furthermore, the control unit 8 is arranged to minimise the utilisation of the main brake with its braking devices 1a-f after the initial period with the object of preventing so-called heat fading, i.e. a reduction of the braking effect that occurs when the brake linings are very heated, and keeping the brake linings cold so that the braking devices are ready for heavy braking of the vehicle or panic braking. The braking process is controlled by a feedback and the control unit 9 is arranged to compare the vehicle's retardation to the desired retardation, i.e. the reference value. The sensor 12 can thus be arranged to sense the vehicle's retardation and transmit a signal to the control unit 9, equivalent to the retardation. The control unit 9 distributes the braking effect to the main brake and its braking devices 1a-f until the retarder 3 generates the desired braking effect by itself, i.e. the braking effect of the retarder 3 corresponds essentially to the reference value.

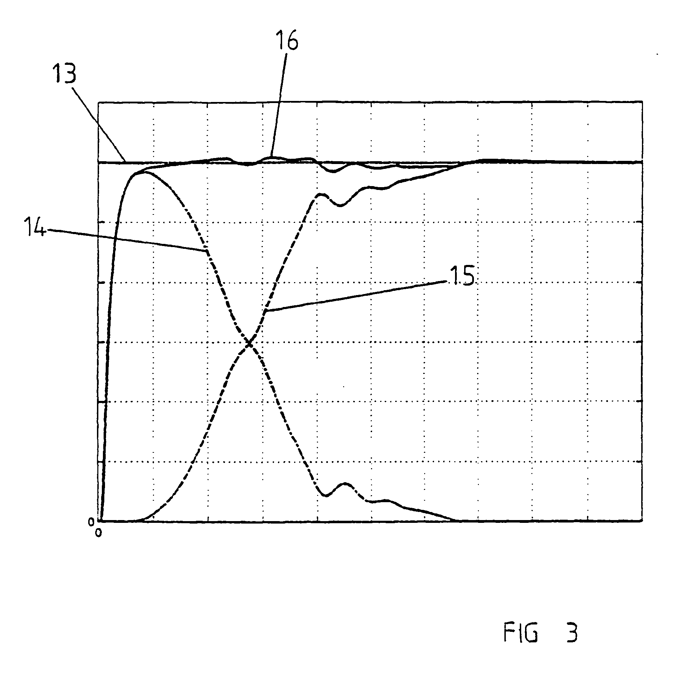

In Fig 3 the braking process is illustrated in a graph diagram. The horizontal axis depicts time and the vertical axis depicts braking effect. The curve 13 corresponds to the desired braking effect, i.e. the reference value, the curve 14 corresponds to the braking effect of the braking devices 1a-f, the curve 15 corresponds to the braking effect of the retarder 3, and the curve 16 corresponds to the total braking effect.

As the graphs show, the control unit 9 of the arrangement is arranged in such a way that the braking effect requested by the driver is obtained in the shortest possible time and in such a way that the use of the braking devices 1a-f of the main brake is minimised after the initial period. Initially, only the main brake and its braking devices 1 a-f are responsible for the outgoing braking effect. But as the outgoing braking effect of the retarder 3 increases (curve 15), the braking effect of the main brake is reduced (curve 14). After a certain time the main brake is inactive and the retarder 3 alone is supplying the braking effect requested by the driver.

The invention is in no way limited to the embodiments described in the examples but may be modified freely within the scope of the following patent claims.

## Claims

1. Arrangement for controlling a braking arrangement on a heavy vehicle, such as a truck for example, with a number of wheels that bear the vehicle, which braking arrangement comprises a main brake that includes braking devices (1 a-f) that are each arranged to act on one of the named wheels (2a-f), at least one auxiliary brake (3) and at least one brake control (10) with which the named main brake (1 a-f) and the named auxiliary brake (3) are activated, and wherein the arrangement includes a control unit (9), wherein when the brake control (10) is activated, the control unit (9) is arranged to initiate activation of the named main brake (1 a-f) and the named auxiliary brake (3) and thus distribute the braking effect between the named main brake (1a-f) and the named auxiliary brake (3), wherein the control unit during an initial period of the named activation is arranged to distribute essentially the whole of the braking effect to the named braking devices (1a-f) of the main brake, wherein said control unit (9) is arranged in such a way that utilization of the braking devices (1 a-f) of the named main brake is minimized after the initial period, and after the initial period the control unit (9) is arranged in such a way that the braking effect is distributed to the auxiliary brake (3), wherein
the control unit (9) is arranged in such a way that the sum of the braking effect from the named main brake (1 a-f) and the braking effect from the named auxiliary brake (3) essentially corresponds to a reference value, wherein a sensor (12) used to sense the vehicle's retardation **characterized in that** the retardation is arranged to be fed back to the named control unit (9), wherein the control unit (9) is arranged to compare the vehicle's retardation to the named reference value.

2. Arrangement according to claim 1, **characterized in that** the named brake control (10) is arranged to define the named reference value.

3. Arrangement according to claim 2, **characterized in that** the named brake control (10) is movable against the effect of a flexible force that is essentially proportional to the named reference value.

4. Arrangement according to any one of the foregoing claims, **characterized in that** the control unit (9) is arranged when the named brake control (10) is activated to essentially simultaneously activate the named main brake (1 a-f) and at least the named auxiliary brake (3).

5. Arrangement according to any one of the foregoing claims, **characterized in that** the named auxiliary brake (3) comprises a retarder that generates a braking torque using viscous friction.

6. Arrangement according to any one of the foregoing claims, **characterized in that** a further auxiliary brake (6) and that the control unit (9) is arranged to distribute the braking effect between the named main brake (1 a-f), the named auxiliary brake (3), and the named further auxiliary brake (6).

7. Arrangement according to claim 6, **characterized in that** the named further auxiliary brake (6) comprises either an exhaust brake or a compression brake.

## Patentansprüche

1. Anordnung zum Steuern einer Bremsanordnung an einem schweren Fahrzeug, wie beispielsweise einem Lastwagen, mit einer Anzahl von Rädern, welche das Fahrzeug tragen, wobei die Bremsanordnung umfasst: eine Hauptbremse, welche Bremsvorrichtungen (1a-f) aufweist, welche jeweils derart eingerichtet sind, dass sie auf eines der genannten Räder (2a-f) einwirken, zumindest eine Hilfsbremse (3) und zumindest eine Brems-Steuerung (10), mittels welcher die genannte Hauptbremse (1a-f) und die genannte Hilfsbremse (3) aktiviert werden, und wobei die Anordnung eine Steuereinheit (9) aufweist, wobei bei Aktivieren der Brems-Steuerung (10) die Steuereinheit (9) derart eingerichtet ist, dass sie ein Aktivieren der Hauptbremse (1a-f) und der Hilfsbremse (3) initiiert, und somit die Bremswirkung zwischen der Hauptbremse (1a-f) und der Hilfsbremse (3) verteilt, wobei die Steuereinheit (9) während eines Anfangs-Zeitraums des Aktivierens derart eingerichtet ist, dass sie im Wesentlichen die gesamte Bremswirkung den Bremsvorrichtungen (1a-f) der Hauptbremse zuteilt, wobei die Steuereinheit (9) derart eingerichtet ist, dass ein Verwenden der Bremsvorrichtungen (1a-f) der Hauptbremse nach dem AnfangsZeitraum minimiert wird/ist, und wobei nach dem Anfangszeitraum die Steuereinheit (9) derart eingerichtet ist, dass die Bremswirkung auf die Hilfsbremse (3) verteilt wird, wobei die Steuereinheit (9) derart eingerichtet ist, dass die Summe der Bremswirkung von der Hauptbremse (1a-f) und der Bremswirkung von der Hilfsbremse (3) im Wesentlichen zu einem Referenzwert korrespondiert, wobei ein Sensor (12) eingesetzt wird, um die Verzögerung des Fahrzeugs zu erfassen, **dadurch gekennzeichnet, dass** vorgesehen ist, dass die Verzögerung an die Steuereinheit (9) zurückgeführt wird, wobei die Steuereinheit (9) dazu ausgebildet ist, um die Verzögerung des Fahrzeugs mit dem Referenzwert zu vergleichen.

2. Anordnung nach Anspruch 1, **dadurch gekennzeichnet, dass** die Brems-Steuerung (10) dazu eingerichtet ist, den Referenzwert zu definieren.

3. Anordnung nach Anspruch 2, **dadurch gekennzeichnet, dass** die Brems-Steuerung (10) gegen die Wirkung einer flexiblen Kraft bewegbar ist, welche im Wesentlichen proportional zum Referenzwert ist.

4. Anordnung nach einem der vorhergehenden Ansprüche, **dadurch gekennzeichnet, dass** die Steuereinheit (9) derart eingerichtet ist, dass sie bei Aktivieren der Brems-Steuerung (10) im Wesentlichen simultan die Hauptbremse (1a-f) und zumindest die Hilfsbremse (3) aktiviert.

5. Anordnung nach einem der vorhergehenden Ansprüche, **dadurch gekennzeichnet, dass** die Hilfsbremse (3) eine Verzögerungs-Vorrichtung umfasst, welche unter Verwendung viskoser Reibung ein Brems-Drehmoment erzeugt.

6. Anordnung nach einem der vorhergehenden Ansprüche, **dadurch gekennzeichnet, dass** eine weitere Hilfsbremse (6) und dass die Steuereinheit (9) dazu eingerichtet sind, die Bremswirkung zwischen der Hauptbremse (1a-f), der Hilfsbremse (3), und der weiteren Hilfsbremse (6) zu verteilen.

7. Anordnung nach Anspruch 6, **dadurch gekennzeichnet, dass** die weitere Hilfsbremse (6) entweder eine Abgas- Bremse oder eine Kompressions-Bremse umfasst.

## Revendications

1. Agencement pour commander un équipement de freinage sur un véhicule lourd, comme un camion à titre d'exemple, avec plusieurs roues qui portent le véhicule, lequel équipement de freinage comprend un frein principal qui comporte des dispositifs de freinage (1a-f) qui sont chacun agencés pour agir sur une des roues désignées (2a-f), au moins un frein auxiliaire (3) et au moins une commande de frein (10) avec laquelle le frein principal désigné (1a-f) et le frein auxiliaire désigné (3) sont activés et dans lequel l'équipement comprend une unité de commande (9), dans lequel quand la commande de frein (10) est activée, l'unité de commande (9) est agencée pour amorcer l'activation du frein principal désigné (1a-f) et du frein auxiliaire désigné (3) et distribuer ainsi l'effet de freinage entre le frein principal désigné (1a-f) et le frein auxiliaire désigné (3), dans lequel l'unité de commande (9) pendant une période initiale de l'activation désignée est agencée pour répartir essentiellement la totalité de l'effet de freinage aux dispositifs de freinage désignés (1a-f) du frein principal et dans lequel ladite unité de commande (9) est agencée de telle façon qu'une utilisation des dispositifs de freinage (1a-f) du frein principal désigné est minimisée après la période initiale, et après la période initiale, l'unité de commande (9) est agencée de telle façon que l'effet de freinage est distribué au frein auxiliaire (3), dans lequel l'unité de commande (9) est agencée de telle façon que la somme de l'effet de freinage à partir du frein principal désigné (1a-f) et de l'effet de freinage à partir du frein auxiliaire désigné (3) correspond essentiellement à une valeur de référence, dans lequel un capteur (12) est utilisé pour détecter le ralentissement du véhicule, **caractérisé en ce que** le ralentissement est agencé pour être réinjecté dans l'unité de commande désignée (9), où l'unité de commande (9) est agencée pour comparer le ralentissement du véhicule à la valeur de référence désignée.

2. Agencement selon la revendication 1, **caractérisé en ce que** la commande de frein désignée (10) est agencée pour définir la valeur de référence désignée.

3. Agencement selon la revendication 2, **caractérisé en ce que** la commande de frein désignée (10) est mobile vis-à-vis de l'effet d'une force flexible qui est essentiellement proportionnelle à la valeur de référence désignée.

4. Agencement selon l'une quelconque des revendications précédentes, **caractérisé en ce que** l'unité de commande (9) est agencée quand la commande de frein désignée (10) est activée pour activer essentiellement simultanément le frein principal désigné (1a-f) et au moins le frein auxiliaire désigné (3).

5. Agencement selon l'une quelconque des revendications précédentes, **caractérisé en ce que** le frein auxiliaire désigné (3) comprend un ralentisseur qui génère un couple de freinage utilisant une friction visqueuse.

6. Agencement selon l'une quelconque des revendications précédentes, **caractérisé par** un frein auxiliaire supplémentaire (6) et en ce que l'unité de commande (9) est agencée pour répartir l'effet de freinage entre le frein principal désigné (1a-f), le frein auxiliaire désigné (3) et le frein auxiliaire supplémentaire désigné (6).

7. Agencement selon la revendication 6, **caractérisé en ce que** le frein auxiliaire supplémentaire désigné (6) comprend soit un frein d'échappement, soit un frein de compression.
